Europäisches Patentamt

European Patent Office

Office européen des brevets

(19)

(11) Veröffentlichungsnummer : **0 392 080 B1**

(12) **EUROPÄISCHE PATENTSCHRIFT**

(45) Veröffentlichungstag der Patentschrift :
**13.05.92 Patentblatt 92/20**

(51) Int. Cl.⁵ : **G01C 19/72**

(21) Anmeldenummer : **89121103.9**

(22) Anmeldetag : **15.11.89**

(54) **Verfahren zur Signalauswertung für einen Faserkreisel.**

(30) Priorität : **12.04.89 DE 3912005**

(43) Veröffentlichungstag der Anmeldung :
**17.10.90 Patentblatt 90/42**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**US-A- 4 440 498**
**US-A- 4 479 715**
**US-A- 4 653 917**

(56) Entgegenhaltungen :
**APPL. PHYS. LETT., Band 41, Nr. 7, 1. Oktober**
**1982, Seiten 616-618, American Institute of**
**Physics; K.P. KOO et al.: "Passivestabilization**
**scheme for fiber interferometers using (3X3)**
**fiber directional couplers"**

(73) Patentinhaber : **Messerschmitt-Bölkow-Blohm**
**Gesellschaft mit beschränkter Haftung**
**Robert-Koch-Strasse**
**W-8012 Ottobrunn (DE)**

(72) Erfinder : **Bühler, Wolfhardt**
**Feldbergstrasse 84**
**W-8000 München 82 (DE)**
Erfinder : **Poisel, Hans, Dr.**
**Neustädter Strasse 6**
**W-8060 Dachau (DE)**
Erfinder : **Trommer, Gert, Dr.**
**Connollystrasse 16**
**W-8000 München 40 (DE)**

**Beschreibung**

Die Erfindung bezieht sich auf ein Verfahren zur Signalauswertung für einen Faserkreisel gemäß dem Gattungsbegriff des Anspruchs 1.

Durch die US-PS 4 440 498 ist ein Faserkreisel bekanntgeworden, der mit einem 3×3-Koppler versehen ist, mittels dem nahe am Quadraturpunkt gearbeitet werden kann, ohne einen Modulator verwenden zu müssen.

Durch die US-PS 4 479 715 ist ein weiterer, mit einem abgewandelten 3×3-Koppler versehener Faserkreisel bekanntgeworden, welcher die Drehrate aus den Signalen der Photodioden P1 und P2 entsprechend der Beziehung (P1-P2)/(P1+P2) = f(Φ) ableitet. Der Vorteil dieses Signalauswerteverfahrens liegt darin, daß hierbei sich die Lichtintensität der Lichtquelle herauskürzt und deren Fluktuationen daher keinen Einfluß mehr auf das Meßergebnis haben.

Die vorgenannten Ausführungsformen sowie alle anderen bisher zum Stand der Technik zählenden Konzeptionen sind jedoch mit einer Reihe von nachstehend aufgezeigten Problemen behaftet. Bekanntlich lassen Faserkreisel mit 3×3-Koppler aufgrund ihres Aufbaus prinzipiell keinen Betrieb mit reziprokem Lichtweg zu. Umweltbedingte Fluktuationen der Übertragungseigenschaften der Faserspule - beispielsweise durch Temperatur und mechanischen Druck - äußern sich in einer Nullpunktdrift und einer Skalenfaktordrift des Kreiselsignals. Die Nullpunktfehler lassen sich durch Verwendung unpolarisierten Lichtes vermeiden, die störenden Kontrastvariationen des Interferenzsignals jedoch bleiben bestehen. Eine genaue Analyse der Ausgangssignale ergibt für die Ausgangssignale $P_2$ und $P_3$ der Detektor-Fotodioden $D_2$ und $D_3$

$$P_2 = v \cdot (A + kB \cdot \cos(\Phi\text{-}c)) \cdot I$$
$$P_3 = v \cdot (A + Kb \cdot \cos(\Phi + c)) \cdot I$$

bei Verwendung von unpolarisiertem Licht. Hierbei sind die Drehrate $\Omega$ und die Sagnac-Phase $\Phi$ mit dem Skalierungsfaktor s entsprechend der Gleichung $\Phi = s \cdot \Omega$ verknüpft. Mit "v" ist ein Konvertierungsfaktor zur Beschreibung des Wirkungsgrades der Fotodioden und mit "I" die Intensität der Lichtquelle LQ bezeichnet. "A", "B", "c" sind konstante Koeffizienten, die aus den Übertragungseigenschaften des 3×3-Kopplers resultieren.

Variabel ist jedoch der Kontrastfaktor "k". Dieser hängt von der Stärke von immer in Glasfasern vorhandenen Polarisations-Koppelzentren ab, welche sehr sensitiv auf Temperaturen und Druck reagieren. Die jeweilige Größe von "k" ist unbekannt und verfälscht daher die Auswertung der gesuchten Sagnac-Phase $\Phi$ und damit der gesuchten Drehrate $\Omega$. So würde beispielsweise die in der US-PS 4 479 715 vorgeschlagene Auswerte-Methode zu dem Ergebnis führen

$$\frac{P_2 - P_3}{P_2 + P_3} = \frac{\sin\Phi}{A/(kB\sin c) + \cot c \cdot \cos\Phi} \quad (5)$$

Bei bekannt und konstant vorausgesetzten Kopplerkoeffizienten A, B, c kommt zwar auf der rechten Seite der Gleichung die gesuchte Sagnac-Phase $\phi$ vor, jedoch auch der unbekannt fluktuierende Kontrastfaktor "k". Eine exakte Bestimmung der Drehrate $\Omega$ ist daher **nicht** möglich.

Um mit einem gewöhnlichen Auswerteverfahren hinreichend genaue Ergebnisse zu erreichen, müßte versucht werden, durch Wahl sehr teuerer Spezialfasern, stark dämpfenden Vergußmassen usw. die Koppelzentren gering zu halten und damit den Kontrastfaktor "k" möglichst auf einen konstanten Wert zu bringen. Der Aufwand solch hochgenauer Komponenten ist sehr hoch.

Der vorliegenden Erfindung liegt die Aufgabe zugrunde, in einfacher und aufwandsarmer Weise die vorgenannten Probleme des Standes der Technik zu lösen und eine exakte Bestimmung der Drehrate $\Omega$ zu gewährleisten.

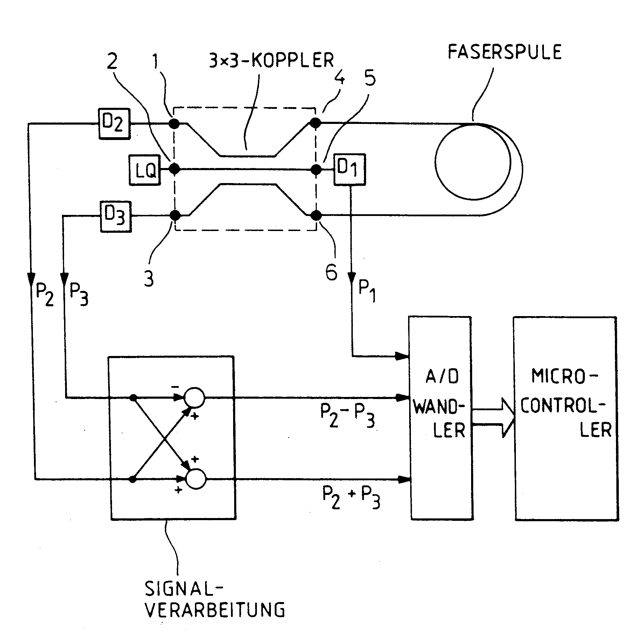

Diese Aufgabe wird durch die im Anspruch 1 aufgezeigten Maßnahmen gelöst. In den Unteransprüchen sind Weiterbildungen und Ausgestaltungen angegeben und in der nachfolgenden Beschreibung wird ein Ausführungsbeispiel erläutert. Die Figur der Zeichnung, die ein Blockschaltbild eines Faserkreisels in schematischer Darstellung zeigt, ergänzt die Erläuterung.

Das zur Lösung vorgeschlagene Verfahren sieht vor, daß die Informationen bzw. die Fotoströme $P_1$, $P_2$ und $P_3$ der drei Detektordioden $D_1$, $D_2$, $D_3$ so ausgewertet werden, daß daraus die drei unbekannten Faktoren bzw. Größen $\Omega$, k und I in eindeutiger Weise folgen. So liefert die Gleichung (1) gemäß Anspruch 1 einen eindeutigen Ausdruck für die gesuchte Drehrate $\Omega$. Die unbekannte Lichtintensität I und der Kontrastfaktor k sind hierbei eliminiert; Fluktuationen von ihnen können das Auswertergebnis nicht mehr verfälschen. Anzuführen ist hier noch, daß der ebenfalls bekannte und konstante Koeffizient D das Ausgangssignal $P_1$ der Fotodiode $D_1$ mit $P_1 = v.D.I$ beschreibt.

Der große Vorteil dieser Auswerte-Methode liegt darin, daß an die Qualität der Faserspule und der anderen optischen Bauteile - wie beispielsweise Faserspleiße - nun nicht mehr so hohe Anforderungen gestellt werden müssen. Für den zur Auswertung verwendeten Microcontroller hingegen spielt es vom Aufwand her keine Rolle, welche Art von Auswerteprogramm darin implementiert wird. Unsymmetrien des 3×3-Kopplers oder der Fotodioden $D_1$, $D_2$, $D_3$ lassen sich durch entsprechende Koeffizienten problemlos berücksichtigen, ohne daß sich am Auswerteprinzip etwas ändert.

In der Figur der Zeichnung ist ein Ausführungsbeispiel in einem Blockschaltbild skizziert. Aufbau und Funktion sind wie folgt: Das Licht der Lichtquelle LQ wird in den 3×3-Koppler - und zwar in den Anschluß 2 - eingekoppelt, an dessen zwei gegenüberliegenden Anschlüssen 4 und 6 die Faserspule optisch angeschlossen ist. Am gleichen Ende wie die Faserspule ist die Fotodiode $D_1$ angeordnet, deren elektrisches Ausgangssignal $P_1$ einem A/D-Wandler zugeführt wird. Die elektrischen Ausgangssignale $P_2$, $P_3$ der Fotodioden $D_2$, $D_3$ werden einer analogen Signalverarbeitungs-Schaltung zugeführt, welche daraus die Summen- und Differenzsignale $P_2 + P_3$ und $P_2 - P_3$ liefert. Diese Signale gehen dem vorerwähnten A/D-Wandler ein, werden dort digitalislert und dem ebenfalls bereits genannten Microcontroller zugeführt. Letzterer führt dann die Rechenoperationen aus, um aus den drei Signalen die unbekannte Drehrate $\Omega$ zu ermitteln.

Der Vorteil in der analogen Differenzbildung ist darin zu sehen, daß der hohe Gleichanteil der Signale $P_2$ und $P_3$ sich in der Differenz eliminiert und daß daher nur das echte, die Drehrate $\Omega$ darstellende Signal, mit hoher Genauigkeit digitalisiert werden muß. Zur Auflösung niedriger Drehraten ist daher für den A/D-Wandler keine hohe Bit-Zahl mehr erforderlich.

Das Summensignal $P_2 + P_3$ hingegen ist in der genannten Auswertung ein Maß für den Skalenfaktor. Ungenauigkeiten in $(P_2 + P_3)$ haben daher keinen "Offset", sondern lediglich Fluktuationen des Skalenfaktors zur Folge.

Zu erwähnen wäre noch, daß auch mathematisch äquivalente Auswerteformeln verwendbar sind, zum Beispiel :

$$\frac{P_2 - P_1 \cdot A/D}{P_3 - P_1 \cdot A/D} = \frac{\cos(s \cdot \Omega - c)}{\cos(s \cdot \Omega + c)} \quad (6)$$

Hier ist jedoch der Nachteil gegeben, daß nicht direkt die Differenz $P_2 - P_3$ gebildet wird. Selbstverständlich ist für den Fachmann naheliegend, die hier genannte Lehre auf den Fall unsymmetrischer 3×3-Koppler und ungleicher Wirkungsgrade/Verstärkungen der Fotodioden zu übertragen.

Zusammenfassend kann gesagt werden, daß das vorgeschlagene Verfahren zur Signalauswertung es erlaubt, trotz unbekannter Fluktuationen der optischen Eigenschaften der Faserspule ein genaues Sagnac-Signal zu ermitteln und damit eine hohe Meßgenauigkeit bei gleichzeitiger Verminderung der Anforderungen an die Qualität der optischen Komponenten gewährleistet.

Weiterhin ist das Verfahren nach Anspruch 1 dadurch gekennzeichnet, daß die Koeffizienten A, c, D, s in einer Eichprozedur durch Messung der Fotoströme $P_1(\Omega)$, $P_2(\Omega)$, $P_3(\Omega)$ als Funktion der bekannten Drehrate $(\Omega)$ aus dem Fit der Funktion

$$\frac{P_2(\Omega) - P_3(\Omega)}{P_2(\Omega) + P_3(\Omega) - \frac{2A}{D} P_1(\Omega)} \cdot \cot c - \tan(s \cdot \Omega) = 0$$

bestimmt werden und
ferner ist das Verfahren nach Anspruch 1 dadurch gekennzeichnet, daß die Koeffizienten A, c, D, s in einer Eichprozedur durch Messung der Fotoströme $P_1(\Omega)$, $P_2(\Omega)$, $P_3(\Omega)$ als Funktion der bekannten Drehrate $(\Omega)$ aus dem Fit der Funktionen

$$\frac{A}{D} + \frac{kB}{D} \cos(s \cdot \Omega - c) - \frac{P_2(\Omega)}{P_1(\Omega)} = 0$$

$$\frac{A}{D} + \frac{kB}{D} \cos(s \cdot \Omega + c) - \frac{P_3(\Omega)}{P_1(\Omega)} = 0$$

bestimmt werden, wobei k . B Hilfskoeffizienten sind, welche ein Maß des Kontrastes des Interferenzsignals des 3×3-Kopplers darstellen.

Außerdem ist das Verfahren zur Signalauswertung nach vorstehendem dadurch gekennzeichnet, daß die Koeffizienten A, c, D, s als Funktion der Temperatur in einer Eichprozedur bestimmt werden, wozu der Faserkreisel mit einem Temperaturfühler versehen wird und daß im Betrieb für die Signalauswertung nach Anspruch 1 diejenigen Koeffizienten A, c, D, s im Auswerterechner gewählt werden, welche der Temperatur des Temperatursensors im Faserkreisel zugeordnet sind.

## Patentansprüche

1. Verfahren zur Signalauswertung für einen Faserkreisel mit einem 3×3-Koppler, wobei eine Lichtquelle (LQ) Licht in einen Anschluß (2) des 3×3-Kopplers einspeist, eine Faserspule an zwei weiteren Anschlüssen (4) und (6) anliegt und jeweils eine von drei Fotodioden ($D_1$, $D_2$, $D_3$) an die restlichen Anschlüsse (1, 3, 5,) angekoppelt sind, **dadurch gekennzeichnet, daß**

a) die Lichtquelle (LQ) breitbandiges, im wesentlichen unpolarisiertes Licht in den 3×3-Koppler einspeist,
b) zur Bestimmung der gesuchten Drehrate ($\Omega$) die Fotoströme $P_1$, $P_2$ und $P_3$ der Fotodioden ($D_1$, $D_2$, $D_3$) gemäß der folgenden Gleichung in einer dem Faserkreisel zugeordneten Auswerterechner ausgewertet werden :

$$\frac{P_2 - P_3}{P_2 + P_3 - \frac{2A}{D} P_1} \cdot \cot c - \tan (s \cdot \Omega)$$

worin A, c, D, s drehratenunabhängige Koeffizienten darstellen, die in dem Auswerterechner abgespeichert sind.

2. Verfahren zur Signalverarbeitung nach Anspruch 1, **dadurch gekennzeichnet,** daß die Koeffizienten A, c, D, s in einer Eichprozedur durch Messung der Fotoströme $P_1(\Omega)$, $P_2(\Omega)$, $P_3(\Omega)$ als Funktion der bekannten Drehrate ($\Omega$) aus dem Fit der Funktion

$$\frac{P_2(\Omega) - P_3(\Omega)}{P_2(\Omega) + P_3(\Omega) - \frac{2A}{D} P_1(\Omega)} \cdot \cot c - \tan (s \cdot \Omega) = 0$$

bestimmt werden.

3. Verfahren zur Signalverarbeitung nach Anspruch 1, **dadurch gekennzeichnet,** daß die Koeffizienten A, c, D, s in einer Eichprozedur durch Messung der Fotoströme $P_1(\Omega)$, $P_2(\Omega)$, $P_3(\Omega)$ als Funktion der bekannten Drehrate ($\Omega$) aus dem Fit der Funktionen

$$\frac{A}{D} + \frac{kB}{D} \cos (s \cdot \Omega - c) - \frac{P_2(\Omega)}{P_1(\Omega)} = 0 \quad (3)$$

$$\frac{A}{D} + \frac{kB}{D} \cos (s \cdot \Omega + c) - \frac{P_3(\Omega)}{P_1(\Omega)} = 0 \quad (4)$$

bestimmt werden, wobei k . B Hilfskoeffizienten sind, welche ein Maß des Kontrastes des Interferenzsignals des 3×3-Kopplers darstellen.

4. Verfahren zur Signalauswertung nach einem der Ansprüche 1 bis 3, **dadurch gekennzeichnet,** daß die Koeffizienten A, c, D, s als Funktion der Temperatur in einer Eichprozedur bestimmt werden, wozu der Faserkreisel mit einem Temperaturfühler versehen wird und daß im Betrieb für die Signalauswertung nach Anspruch 1 diejenigen Koeffizienten A, c, D, s im Auswerterechner gewählt werden, welche der Temperatur des Temperatursensors im Faserkreisel zugeordnet sind.

## Claims

1. Method of signal evaluation for a fibre gyro with a 3 x 3 coupler, whereby a light souce (LQ) feeds light into a connection (2) of the 3 x 3 coupler, a fibre coils abuts two further connections (4) and (6), and a respective one of three photo diodes ($D_1$, $D_2$, $D_3$) is coupled to the remaining connections (1, 3, 5), characterised in that
a) the light source (LQ) feeds broadbanded, substantially unpolarised light into the 3 x 3 coupler;
b) for the purpose of determining the wanted induction rate ($\Omega$) the photo currents $P_1$, $P_2$ and $P_3$ of the photo diodes ($D_1$, $D_2$, $D_3$) are evaluated in an evaluating computer associated with the fibre gyro according to the following equation:

$$\frac{P_2 - P_3}{P_2 + P_3 - \frac{2A}{D} P_1} x \cot c = \tan (s \; x \; \Omega)$$

with A, c, D, s representing coefficients independent from the induction rate, which are stored in the evaluating computer.

2. Method of signal processing according to claim 1, characterised in that the coefficient A, c, D, s are determined in a calibration procedure by measuring the photo currents $P_1 (\Omega)$, $P_2 (\Omega)$, $P_3 (\Omega)$ as a function of the known induction rate ($\Omega$) from the fit of the function

$$\frac{P_2 (\Omega) - P_3 (\Omega)}{P_2 (\Omega) + P_3 (\Omega) - \frac{2A}{D} P_1 (\Omega)} x \cot c - \tan (s \; x \; \Omega) = 0$$

3. Method of signal processing according to claim 1, characterised in that the coefficients A, c, D, s are determined in a calibration procedure by measuring the photo currents $P_1 (\Omega)$, $P_2 (\Omega)$, $P_3 (\Omega)$ as a function of the known induction rate ($\Omega$) from the fit of the functions

$$\frac{A}{D} + \frac{kB}{D} \cos (s \times \Omega - c) - \frac{P_2(\Omega)}{P_1(\Omega)} = 0 \quad (3)$$

$$\frac{A}{D} + \frac{kB}{D} \cos (s \times \Omega + c) - \frac{P_3(\Omega)}{P_1(\Omega)} = 0 \quad (4)$$

whereby k x B are auxiliary coefficients representing a measure of contrast of the interference signal of the 3 x 3 coupler.

4. Method of signal evaluation according to one of claims 1 to 3, characterised in that the coefficients A, c, D, s are determined as a function of temperature in a calibration procedure, for which purpose the fibre gyro is provided with a temperature sensor, and that during operation for signal evaluation according to claim 1 those coefficients A, c, D, s are selected in the evaluation computer which are associated with the temperature of the temperature sensor in the fibre gyro.

## Revendications

1. Procédé d'exploitation de signaux pour un gyroscope à fibre optique, comprenant un coupleur 3x3, une source lumineuse (LQ) envoyant de la lumière dans une borne (2) du coupleur 3x3, une bobine de fibre étant connectée à deux autres bornes (4) et (6) et chaque fois une photodiode parmi trois photodiodes ($D_1$, $D_2$, $D_3$) étant couplée aux autres bornes (1, 3, 5), caractérisé par le fait que

a) la source lumineuse (LQ) envoie de la lumière à large bande, essentiellement non polarisée dans le coupleur 3x3,

b) pour déterminer la rotation ($\Omega$), les courants photoélectriques ($P_1$, $P_2$, $P_3$) des photodiodes ($D_1$, $D_2$, $D_3$) sont exploités selon l'équation suivante dans un calculateur d'exploitation associé au gyroscope à fibre optique:

$$\frac{P_2 - P_3}{P_2 + P_3 - \dfrac{2A}{D} P_1} \cdot \cot c - \tan (s \cdot \Omega)$$

où A, c, D, s constituent des coefficients qui sont indépendants du taux de rotation et mémorisés dans le calculateur d'exploitation.

2. Procédé d'exploitation de signaux selon la revendication 1, caractérisé par le fait que les coefficients A, c, D, s sont déterminés lors d'un processus d'étalonnage, en mesurant les courants photoélectriques $P_1(\Omega)$, $P_2(\Omega)$, $P_3(\Omega)$ en tant que fonction de la rotation ($\Omega$) connue, à partir de l'adéquation de la fonction suivante:

$$\frac{P_2(\Omega) - P_3(\Omega)}{P_2(\Omega) + P_3(\Omega) - \dfrac{2A}{D} P_1(\Omega)} \cdot \cot c - \tan (s \cdot \Omega) = 0$$

3. Procédé d'exploitation de signaux selon la revendication 1, caractérisé par le fait que les coefficients A, c, D, s sont déterminés lors d'un processus d'étalonnage, en mesurant les courants photoélectriques $P_1(\Omega)$, $P_2(\Omega)$, $P_3(\Omega)$ en tant que fonction de la rotation ($\Omega$) connue, à partir de l'adéquation des fonctions suivantes

$$\frac{A}{D} + \frac{kB}{D} \cos (s \cdot \Omega - c) - \frac{P_2(\Omega)}{P_1(\Omega)} = 0$$

$$\frac{A}{D} + \frac{kB}{D} \cos (s \cdot \Omega + c) - \frac{P_3(\Omega)}{P_1(\Omega)} = 0$$

où k · B sont des coefficients auxiliaires représentant une mesure du contraste du signal d'interférence du coupleur 3x3.

4. procédé d'exploitation de signaux selon l'une des revendications 1 à 3, caractérisé par le fait que les coefficients A, c, D, s sont déterminés en tant que fonction de la température lors d'un processus d'étalonnage, le gyroscope à fibre optique étant muni à cet effet d'un capteur de température, et que, en fonctionnement, on choisit dans le calculateur d'exploitation, en vue de l'exploitation de signaux selon la revendication 1, les coefficients A, c, D, s qui sont associés à la température du capteur de température dans le gyroscope à fibre optique.